# EUROPÄISCHE PATENTANMELDUNG

(11) **EP 0 777 048 A1**
(43) Veröffentlichungstag der Anmeldung: **04.06.1997**
(21) Anmeldenummer: 95118690.7
(22) Anmeldetag: 28.11.1995
(51) Int. Cl.: F03D 3/06

(54) **Windkraftrotor mit automatisch verstellbaren und starren Jalousie-Flügeln, in vertikaler und waagerechter Bauart**

(71) Anmelder: von Görtz & Finger Techn. Entwicklungs Ges.m.b.H., D-36110 Schlitz (DE)
(72) Erfinder: Finger, Ulrich, D-87467 Oberthingau (DE)

(57) **Zusammenfassung**

**Verfahren zur Nutzung der Windkraft zur Energierezeugung**
wobei zumindest ein Teil der Windkraft in nützliche Energie umgewandelt wird.

Das erfindungsgemäße Verfahren, dargestellt als Windrotor in Fig.2 beruht auf der windrichtungsabhängigen, automatischen Verstellung der Flügelwinkel zur Windrichtung, um einen höheren Wirkungsgrad zu erreichen.

Durch Verwendung von feststehenden Flügelpaaren wird zwar der Wirkungsgrad verschlechtert, der Windrotor wird aber dadurch windrichtungsunabhängig und einfacher in der Bauart .

Die Flügelachsen können sowohl senkrecht als auch waagerecht zur senkrecht stehenden Rotorachse angeordnet sein.

## Beschreibung

Die Erfindung richtet sich auf ein Verfahren, um auch bei Schwachwind eine Energie zu erzeugen. Für die Küstenregion haben sich Windräder mit horizontalen Achsen bewährt. Diese Windräder benötigen aber eine Mindestwindgeschindigkeit von 4 m/s um wirtschaftlich zu arbeiten.

Um aber auch im Binnenland mit geringeren Windgeschwindigkeiten eine sinnvolle Energieerzeugung mit Windkraftanlagen zu erreichen, ist es erforderlich, geeignete Windräder zu entwickeln.

Eine solche Windkraftanlage wird nachfolgend beschrieben.

Es handelt sich hierbei um einen Rotor mit vertikalen Achsen an denen Jalousieflügel befestigt sind. Diese sind mit den Achskreuzen fest verbunden oder werden, abhängig von der Windrichtung mit einer Blatteinstellwinkelregelung verstellt.

Bei den starrverbundenen Jalousieflügeln handelt es sich um Flügelpaare, die in einem bestimmten Winkel zueinander mit dem Achskreuz fest verbunden sind. Bei dieser Anordnung ist der Rotor von der anströmenden Windrichtung unabhängig, so daß keine Nachsteuerung nach der jeweiligen Windrichtung erforderlich ist.

Bei der Rotorausführung mit verstellbaren Jalousieflügeln können sowohl Einzel- als auch Doppelflügel verwendet werden. An der Unterseite des Rotors befindet sich ein Zahnriemenritzel, daß am Mast drehbar gelagert ist. Dieses Ritzel wird von einem Gleichstrom Getriebemotor nach der jeweiligen Windrichtung um 360° gedreht. Ein oben am Mast angebrachter Windrichtungsgeber gibt einen Impuls auf das Steuergerät. Dieses verarbeitet und verstärkt den Steuerstrom und gibt ihn an den Gleichstrom Getriebemotor weiter

An den Enden des Drehkreuzes befinden sich die Flügelachsen, an denen auch eine Zahnriemenscheibe mit einem Übersetzungsverhältnis 2:1 angebracht ist. Beide Zahnriemen-Räder sind über einen Zahnriemen verbunden. Damit wird erreicht, daß bei jeder Umdrehung des Drehkreuzes die Jalousieflügel sich nur 1/2 mal drehen.

Mit dieser Anordnung ist es möglich, die Jalousieflügel immer in die richtige Position zur Windrichtung zu stellen. Trift der Wind im Winkel von 90° auf das Drehkreuz, so steht der Jalousieflügel auch 90° zum Wind. Steht das Drehkreuz direkt in Windrichtung, so hat der Flügel einen Winkel von 45° zum Wind und es wirkt die halbe Kraft auf das Drehkreuz. Dies gilt für den vorderen und für den hinteren Flügel.

Wenn das Drehkreuz einen Winkel von 270° zum Wind hat, so stehen die Jalousieflügel genau in Windrichtung, so daß keine Widerstandsfläche gegen die Windrichtung besteht.

Durch die Anbringung eines zusätzlichen Anemometers an der Mastspitze ist es möglich, die Blatteinstellwinkelregelung so zu steuern, daß abhängig von der Windstärke die Flügelverstellung mit einem Vor- oder Nachlauf der jeweiligen Windstärke angepaßt wird. Diese Funktion würde vom Steuergerät, daß unten am Mast befestigt ist, ebenfalls übernommen. Da auch im Binnenland Sturmböen über 20 m/s vorkommen, wird mit der Nachlaufregelung erreicht, daß bei extremen Sturmböen keine Beschädigungen an der Windkraftanlage entstehen.

Die Blatteinstellwinkelregelung erfordert einigen technischen Aufwand. Durch den wesentlich höheren Wirkungsgrad und die niedrigere Anlaufwindgeschwindigkeit ist Windrotor mit senkrechten, verstellbaren Jalousieflügeln bestens für die Schwachwinde im Binnenland geeignet.

Die Anordnung der Achsen für die Jalousieflügel kann sowohl senkrecht als auch waagerecht sein. Dies gilt für die starr montierten Flügelpaare als auch für die verstellbaren Flügel.

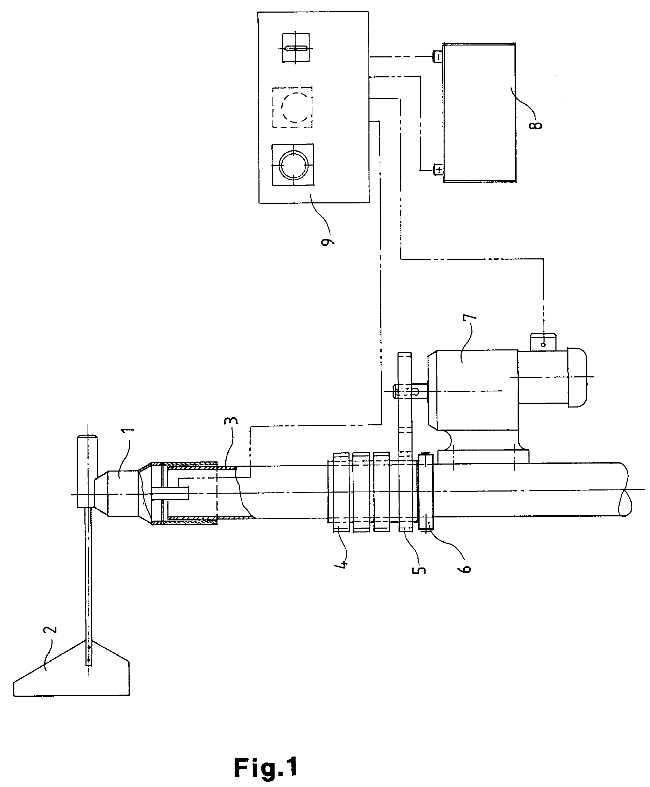

**Fig.1** zeigt den Aufbau der Blatteinstellwinkelregelung. Dabei bedeuteten die eingetragenen Zahlen:
1) Windrichtungsgeber
2) Windfahne
3) Rotormast
4) Zahnriemenritzel
5) Zahnriemenantrieb
6) Kegelkugellager
7) Gleichstrom Getriebemotor
8) Speicherbatterie
9) Steuergerät

**Fig.2** zeigt die Anordnung der senkrecht stehenden Flügel 1 , die Antriebszahnscheibe 2 und den Zahnriementrieb 3. Die Lager 4 sind wetterfest und mit dem Mast 9 fest verbunden. An den Lagern 4 befinden sich drei Streben 5 mit den Achslagern 2 der Flügel 1. Auf der Mastspitze befinden sich das Anemometer 8 und der Windrichtungsgeber 7.

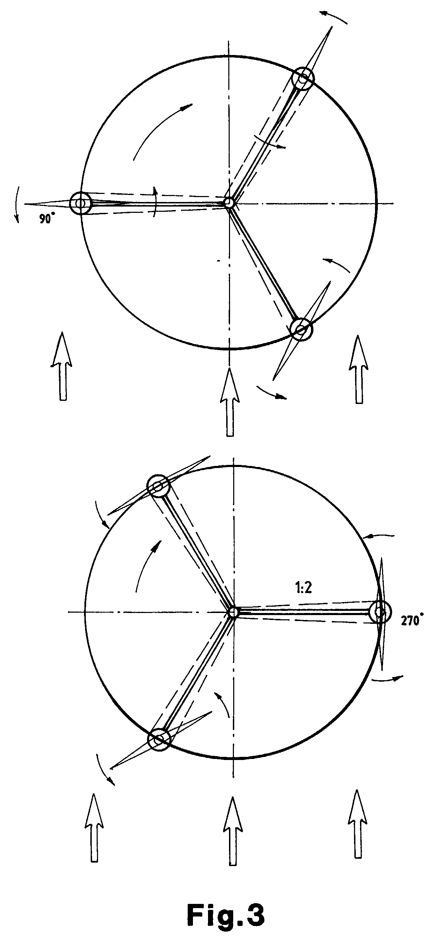

Am Grundriß **Fig.3** ist deutlich zu erkennen, daß der Anstellwinkel der Flügel immer optimal zur Windrichtung eingestellt ist. Bei 90° ist die volle Flügelfläche wirksam und bei 270° steht der Jalousieflügel im Wind.

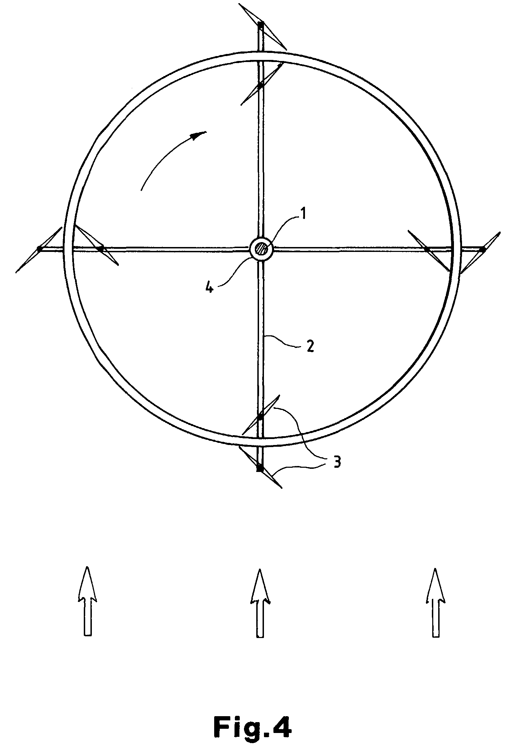

In **Fig.4** ist dargestellt, wie die Flügelpaare bei einer starren Anordnung montiert sind. An dem Drehkreuz mit den Lagern 4 um den Mast 1 befinden sich die Streben 2. Auf diesen Streben sind in einem bestimmten Winkel zueinander die Jalousieflügel fest verbunden. In der Stellung 90° zur Windrichtung erzeugen die Flügel die größte Winkelbeschleunigung. Da die Umfangsgeschwindigkeit immer geringer als die Windgeschwindigkeit ist, kann sich bei dieser Anordnung der Flügel kein Staudruck hinter den Flügeln aufbauen. Der Aufbau dieses Windrotors mit stehenden, festen Flügeln ist sehr einfach und kostengünstig zu fertigen und benötigt wenig Wartung, da keine Windrich tungsnachführung erforderlich ist.

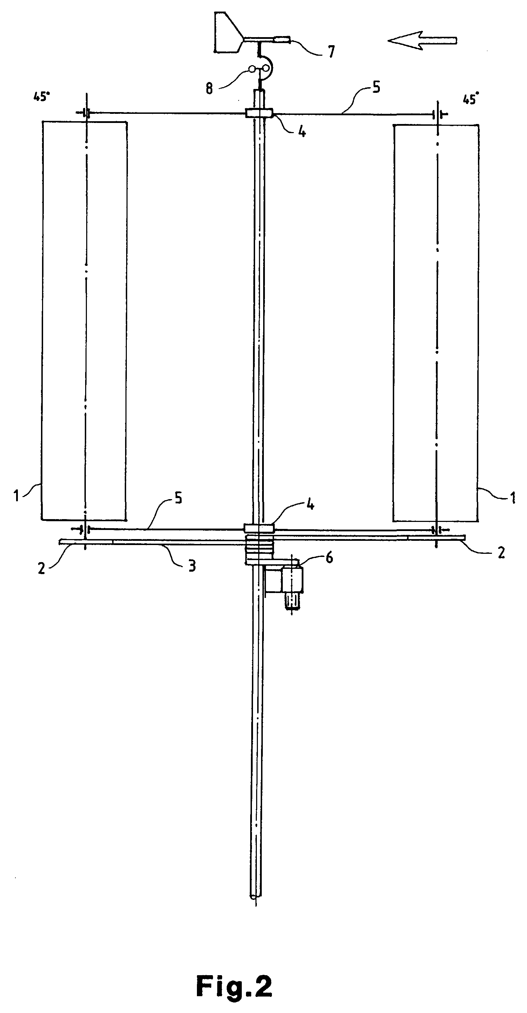

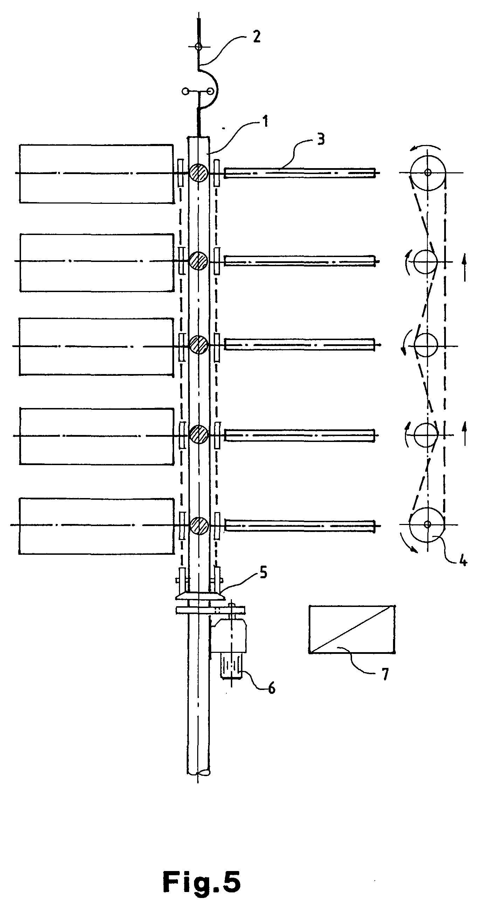

Die gleiche Flügelverstellung wie in Fig.2 und Fig.3 dargestellt kann auch mit waagerecht angeordneten Achsen aus geführt werden. Dieses zeigt die **Fig.5** mit den Positionen
1) als feststehender Mast
2) Windrichtungsgeber für die Steuerung
3) drehbare Flügel mit Zahriemenrad
4) Zahriementrieb für gegenläufige Verstellung
5) Kegelrad für den Antrieb der Verstellung
6) Gleichstrom Getriebemotor für die Verstellung
7) Steuergerät für die Umsetzung der Impulse

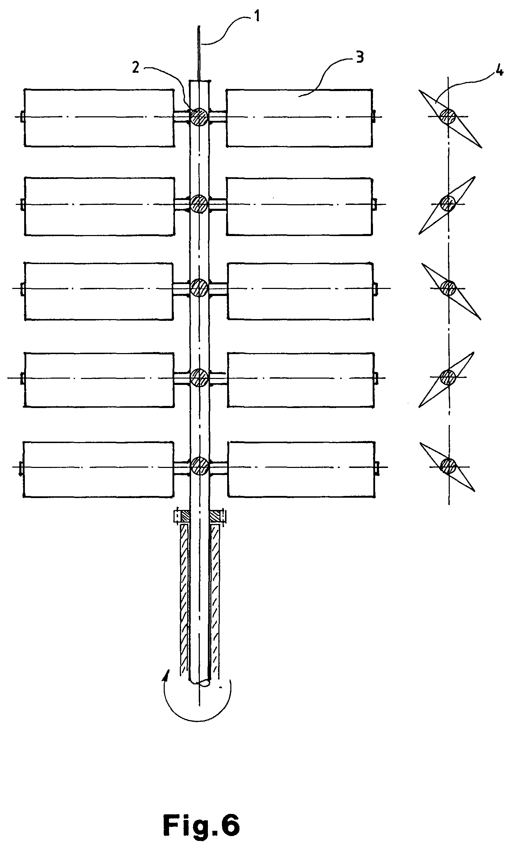

In **Fig.6** wird die gleiche Flügelanordnung gezeigt wie in Fig.5, jedoch mit starr angebrachten Flügeln. Die Nr.4 zeigt die im Gegenwinkel angeordneten Profilflügel. Auch diese Konstruktion mit starren Flügeln ist wie die Fig.4 windrichtungsunabhängig und ist mit wenigen Bauteilen zu fertigen.

Alle in diesem Verfahren aufgeführten Windrotoren sind für die Energieerzeugung in Schwachwindgebieten bestens geeignet und können auch für den Antrieb von Pumpen verwendet werden.

## Patentansprüche

1. Verfahren zur Nutzung der Windkraft, dadurchgekennzeichnet, daß durch die automatische Verstellung der Flügelblätter, abhängig von der Windrichtung, immer ein optimaler Flügelwinkel zur Windrichtung erreicht wird.

2. Verfahren nach Anspruch 1 dadurch gekennzeichnet, daß die Übersetzung des kleineren Ritzels am Mast zum größeren Zahnriemenrad an den Flügelachsen im Verhältnis 1:2 ist und dadurch die Flügel bei einer Umdrehung des Drehkreuzes sich nur 1/2 mal drehen.

3. Verfahren nach mindest einem der Ansprüche 1 bis 2 dadurch gekennzeichnet, daß das kleinere Ritzel am feststehenden Mast bei einer konstanten Windrichtung fest steht und der Zahnriemen bei der Rotation um das kleinere Ritzel abgewickelt wird.

4. Verfahren nach mindestens einem der Ansprüche 1 bis 3 dadurch gekennzeichnet, daß nur bei einer größeren Windrichtungsänderung das kleinere Ritzel am feststestehendem Mast um einen einen bestimmten Winkel verstellt wird.

5. Verfahren nach mindestens einem der Ansprüche 1 bis 4 dadurch gekennzeichnet, daß abhängig von der Windstärke der Flügelwinkel mit einem gewissen Vor- oder Nachlauf gesteuert werden kann, wobei der Nachlauf gleich zeitig als Sturmsicherung ausgelegt ist.

6. Verfahren nach mindestens einem der Ansprüche 1 bis 5 dadurch gekennzeichnet, daß zwei Flügelpaare in einem bestimmten Winkel zueinander auf den Streben des Drehkreuzes befestigt sind und der Windrotor dadurch windrichtungsunabhängig ist.

7. Verfahren nach mindestens einem der Ansprüche 1 bis 6 dadurch gekennzeichnet, daß die verstellbaren Flügelachsen waagerecht zu der senkrechten Rotorachse angeordnet sind und die Flügel durch einen gemeinsamen Zahnriemen gegenläufig zueinander verstellt werden.

8. Verfahren nach mindestens einem der Ansprüche 1 bis 7 dadurch gekennzeichnet, daß die Flügel waagerecht zur Rotorachse fest verbunden sind und in einem bestimmten Winkel zueinander angeordnet sind und dadurch der Windrotor windrichtungsunabhängig ist.
